# EUROPÄISCHE PATENTANMELDUNG

(11) **EP 1 117 272 A2**
(43) Veröffentlichungstag der Anmeldung: **18.07.2001**
(21) Anmeldenummer: 00126712.9
(22) Anmeldetag: 05.12.2000
(51) Int. Cl.: H04Q 11/04

(54) **Verfahren zur Vergebührung von Telekommunikations- und Datentdiensten in hereogenen Telekommunikationsnetzen**

(30) Priorität: 12.01.2000 DE 10000944
(71) Anmelder: SIEMENS AKTIENGESELLSCHAFT, 80333 München (DE)
(72) Erfinder: Frank, Michael, Dr., 81371 München (DE); Rieken, Ralf, Dr., 81674 München (DE)

(57) **Zusammenfassung**

Angewendet wird ein Verfahren der Gebührenberechnung zwischen dem Dienstenehmer und dem Dienstegeber, in dem der aufgerufene Dienstegeber dem ihn aufrufenden Dienstenehmer die Höhe der für diesen Dienstaufruf kalkulierten Gebühren berechnet. Entsteht bei der Bearbeitung des Dienstwunsches des Kunden eine "Aufrufkette" von mehreren Dienstaufrufen, womöglich über mehrere Netze hinweg, so geschieht die Gebührenverrechnung kaskadiert immer direkt zwischen dem verrechnenden Dienst und dem ihn vorhergehenden, aufrufenden Dienst.

## Beschreibung

### Fachgebiet der Erfindung

Die Betreiber von Telekommunikations- und Datennetzen sind in der Regel bestrebt, für die von ihnen angebotene Infrastruktur und Dienste von den jeweiligen Teilnehmern eine angemessene Benutzungsgebühr zu verlangen.
In herkömmlichen Netzen, wie dem Telefonnetz, war die Gebührenabrechnung verhältnismäßig einfach. Alle Dienste waren in den Vermittlungsanlagen realisiert, der Gebührenberechnung lagen Daten zugrunde, die zentral ermittelt und verwaltet wurden.
Der nächste Schritt führte weg von Monopolanbietern wie der Deutschen Bundespost hin zu verteilten Anwendungen. Eine Lösung für das Vergebührungsproblem bietet hier das sogenannte Intelligente Netz IN (nach den Telekommunikationsnormen ITU-T Q.1200 ff.) Das IN vereinheitlicht die "Sprache" aller Geräte der unterschiedlichen Dienstanbieter (und verschiedener Hersteller) auf Basis gemeinsamer Protokolle wie dem Zentralkanalsignalisierungssystem Nr. 7 oder INAP (Intelligent Network Application Part). Die Aufzeichnungen der Gebührendaten wird über sogenannte Call Data Records, CDR, gesteuert, die an verschiedenen Stellen im Netz entstehen und dann in AMA (Automatic Message Accounting) Tickets zu Sammelstellen (im Mobilfunknetz beispielsweise das Heimatregister HLR) gesendet werden.

### Stand der Technik

Eine Beschreibung der Gebührenerfassung in diesen Netzen, die IN Funktionalitäten bieten, findet sich beispielsweise in der Siemens EWSD Dokumentation "Charging, Centralized Tariffing".

Hier werden sogenannte Indirekte und Direkte Tarifierungsverfahren beschrieben, die eine einheitliche Gebührenerfassung ermöglichen sollen.
Die neuen IP-Netze wie das Internet arbeiten vollkommen dezentral und können mit den bisherigen Billing-Mechanismen nicht mehr erfaßt werden. Die Zugangsanbieter (ISP, Internet Service Provider) gehen daher oft einen einfachsten Weg: sie vergebühren über Zugangspauschalen oder überlassen die Vergebührung den Telefongesellschaften, die eine herkömmliche Gebührenermittlung über die Einwahl des Teilnehmers zum ISP über ihre Netze durchführen.
Weiter erschwert wird die Gebührenermittlung, wenn verschiedene Telekommunikationsnetze über neue datenzentrierte Dienste wie IP-Telefonie, Videokonferenz oder Web-Hosting miteinander kombiniert werden.

Ein nächster Schritt in der Entwicklung der Telekommunikationsnetze sind die sogenannten Ad-Hoc-Netze. Eine Beschreibung dieses neuartigen Netztyps, der in der Zukunft sicher an Bedeutung gewinnen wird, findet sich beispielsweise in dem Artikel "Geistreiche Verbindungen, Intelligente Geräte in dezentralen Netzen". Ad-hoc Netze zeichnen sich dadurch aus, daß Netzelemente, und damit auch die von ihnen angebotene Dienste, beliebig in ein Netz eingefügt und wieder aus diesem entfernt werden können. Die zentrale Steuerung wird durch sogenannte schwarze Bretter (Blackboards) übernommen. Netzelemente können dem schwarzen Brett ihre Existenz und ihre Fähigkeiten mitteilen (Join).
Im folgenden werden als Beispiel die Jini™ Mechanismen der Firma Sun Microsystems beschrieben. Dies soll jedoch keine Einschränkung für die erfindungsgemäßen Mechanismen darstellen, da auch HP (jetSend), Lucent (Inferno) oder auch Microsoft (UPnP, Universal Plug 'n Play) ähnliche Systeme entwikkeln.

In dem Artikel "Billing Konzepte für neue Dienste" wird zur Gebührenermittlung in heterogenen Netzen eine sogenannte IP-Mediation-Software beschrieben. Diese fungiert als Schnittstelle zwischen den Netzelementen der IP-Netze und den vorhandenen "Customer Care and Billing" Zentren. In der Arbeitsweise entspricht diese Software dem Konzept der Intelligenten Netze IN. In einer Vielzahl von Netzelementen werden Echtzeitinformationen für eine verbrauchsabhängige Abrechnung, durch Beobachten und Erfassen aussagekräftiger Daten, gesammelt. Die Software kann für verschiedene Netzwerk-Geräte entwickelt werden. Die erzeugten Informationen (Service Detail Records, SDR) werden dann zusammengefaßt, gefiltert.

Dieses Verfahren sind alle sehr aufwendig und für die beschriebenen Ad-Hoc Netze in der Regel nur mit extrem hohen Aufwand oder garnicht anwendbar. Die erzeugte Informationsflut ist hoch, nicht benötigte und redundante Informationen müssen ständig herausgefiltert werden um Kapazitätsengpässe zu vermeiden.

Aufgabe der Erfindung ist es, ein Verfahren für die Gebührenermittlung in Telekommunikationsnetzen anzugeben, das einfach durchzuführen ist und die oben genannten Probleme vermeidet. Weiterhin löst das beschriebene Verfahren das Problem der Gebührenermittlung in dezentralen Netzen und in Ad-hoc Netzen.

### Darstellung der Erfindung

Diese Aufgabe wird gelöst durch ein Verfahren gemäß Patentanspruch 1.

Angewendet wird ein Verfahren der Gebührenberechnung zwischen dem Dienstenehmer und dem Dienstegeber, in dem der aufgerufene Dienstegeber dem ihn aufrufenden Dienstenehmer die Höhe der für diesen Dienstaufruf kalkulierten Gebühren berechnet. Entsteht bei der Bearbeitung des Dienstwunsches des Kunden eine "Aufrufkette" von mehreren Dienstaufrufen, womöglich über mehrere Netze hinweg, so geschieht die Gebührenverrechnung kaskadiert immer direkt zwischen dem verrechnenden Dienst und dem ihn vorhergehenden, aufrufenden Dienst.

Dieser Mechanismus ist einfach zu realisieren. Die Gebührendaten sind einfach zu ermitteln, die Höhe der Gebühren kann auch angepaßt werden, beispielsweise an die aktuelle Auslastung des Dienstes. Das Telekommunikationssystem kann jederzeit um Netze oder Netzelemente erweitert bzw. diese können auch ohne großen Aufwand aus dem Netz wieder entfernt werden.

Vorteilhafte Ausgestaltungen und Weiterbildungen sind in den Unteransprüchen angegeben.
In einer vorteilhaften Ausgestaltungsform der Erfindung bietet eine zentrale Instanz (ein Blackboard) dem Dienstnehmer Informationen über die zur Verfügung stehenden Dienste und koordiniert auch den Zugriff auf die Dienste und fungiert als Gateway.
Der erfindungsgemäße Mechanismus ist insbesondere von Vorteil in sogenannten Ad-Hoc Netzen, für die bisher keine Vergebührungsmechanismen bekannt sind. Aufgrund der speziellen Eigenschaft des Ad-Hoc-Netzes, ist es nicht möglich, ein starres Vergebührungsschema zu verwenden, dem bereits zum Zeitpunkt des Dienstaufrufes bekannt sein muß, welche Netzelemente den Dienst erbringen. Eine hohe Fluktuation von Netzelementen, beispielsweise mobile Endgeräte wie Mobiltelefone, Organizer, Laptops u. ä. würde einen zu hohen Administrationsaufwand für die Vergebührung beanspruchen und die Vergebührungsdaten wären sehr schwer auf dem aktuellsten Stand zu halten.

### Kurzbeschreibung der Zeichungen

Im folgenden wird die Erfindung anhand von Ausführungsbeispielen erläutert. Dabei zeigen
- Figur 1: einen schematischen Aufbau eines beispielhaften Netzes, in dem das erfindungsgemäße Verfahren angewendet wird,
- Figur 2: ein Ablaufdiagramm der kaskadierten Vergebührung am Beispiel von zwei Diensten.

### Beschreibung der bevorzugten Ausgestaltungsformen

Jini™ steuert die Verwaltung von Resourcen remote genutzter Dienste über Blackboards.
Da Jini und das zugrundeliegende Java ursprünglich ausschließlich für die Verwendung im Internet bestimmt waren, wurde bei den dort beschriebenen Konzepten der Gesichtspunkt der Vergebührung von Diensten nicht berücksichtigt. Das erfindungsgemäße Verfahren beinhaltet somit die Lösung für zwei Probleme:
- Vergebührung von Internet-Diensten an sich und
- ein neues Vergebührungskonzept bei verteilten Kommunikationsnetzen mit inkompatiblen Schnittstellen.

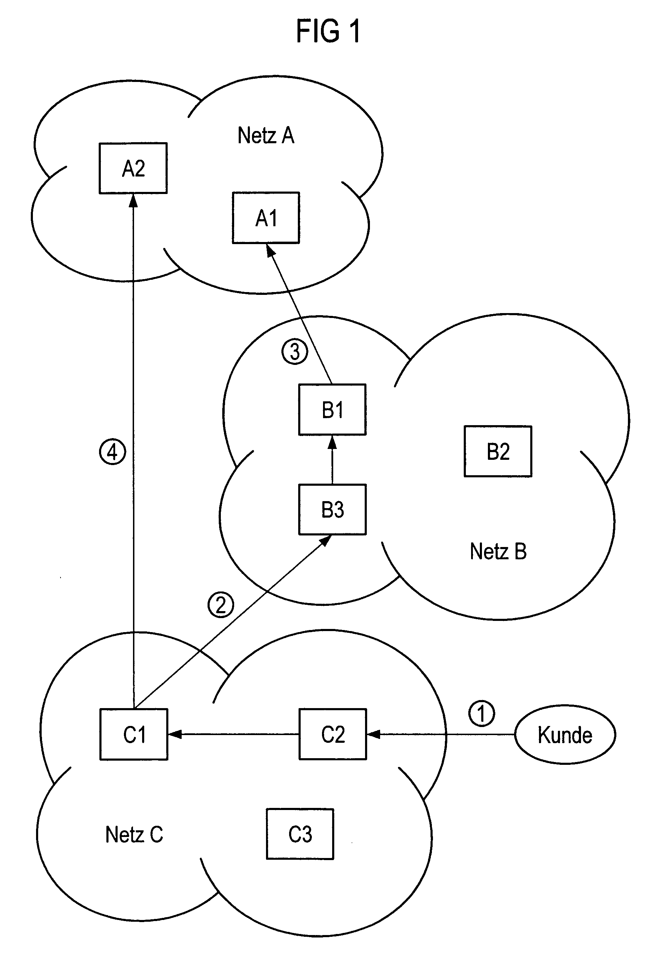

Figur 1 stellt nun ein beispielhaftes Szenario der Erfindung vor. Ein Dienstnehmer Kunde möchte über ein erstes Kommunikationsnetz, Netz A, einen Dienst C2 nutzen.
Die dargestellten Dienste sind von ganz unterschiedlicher Natur, es handelt sich beispielsweise um
- einen Photo-Dienst,
- einen Druck-Dienst,
- einen Telefonbuch-Dienst,
- einen Scan-Dienst,
- Mobilfunkdienste (wie SMS),
- und vieles andere mehr.
Diese Dienste werden von Endgeräten unterschiedlicher Natur bereitgestellt:
- Fax-Gerät,
- Drucker,
- Scanner,
- Digitale Kamara,
- Mobil-Telefon,
- Computer, Laptop, Handheld, Organizer...
- u.v.a.m.
Diese Endgeräte wiederum können sich in verschiedenen Netzen befinden:
- Mobilfunknetz,
- herkömmliches Telefonnetz PSTN,
- Internet...

Ein Kunde möchte nun beispielsweise ein Foto aufnehmen und dieses an dem ihm am nächstliegenden Drucker ausdrucken. Hierfür muß er verschiedene Dienste in Anspruch nehmen. C2 entspricht beispielsweise einem Foto-Dienst. Das erzeugte Foto wird als Datei in einem Laptop (Speicherdienst C1) abgespeichert. Um es nun auszudrucken, muß die Datei zu einem Drucker übertragen werden (Druckdienst A2). Möglicherweise steht in der näheren Umgebung jedoch kein geeigneter Drucker zur Verfügung, dafür jedoch ein Faxgerät (Druckdienst A1). Um das Foto hier auszudrucken, ist zuvor eine Format-Konvertierung (Dienst B3) notwendig.
Bei Aufruf φ des Druckdienstes A2 werden zwischen Netz C und Netz A die anfallenden Gebühren verrechnet. Die darauffolgende Berechnung der Gebühren zum Kunden wird dann von Netz C durchgeführt.
Wird der Druckdienst A1 In Anspruch genommen, so geschieht die erste Gebührenverrechnung δ zwischen Netz A und Netz B, die zweite σ Gebührenverrechnung dann zwischen Netz B und Netz C, bevor der Kunde vergebührt wird.

Aus dem Beispiel wird deutlich, daß der Aufrufweg eines Dienstes in den Netzen nicht vorhersagbar ist. Abhängig davon wird dann auch die dem Kunden nach dem erfindungsgemäßen Verfahren endgültig verrechnete Dienstgebühr unterschiedlich, da abhängig vom tatsächlichen Aufwand, ausfallen.

Der Zugriff auf die Dienste geschieht über ein Blackboard (in der Figur nicht dargestellt). Die Dienste können als Jini-Dienste angeboten werden. Jini™ bietet zusätzlich ein Transportsystem von Bedienoberflächen (Interfaces), so daß das erfindungsgemäße Vorgehen keine Einschränkung bedeutet gegenüber den herkömmlichen zuvor verwendeten Internet-Diensten.
Da die Lösung auf der logischen Ebene des Ad-Hoc Netzes geschieht, können die Dienste aus Sicht der Transportschicht (beispielsweise TCP) auf völlig unterschiedlichen Plattformen im Netz verteilt sein.

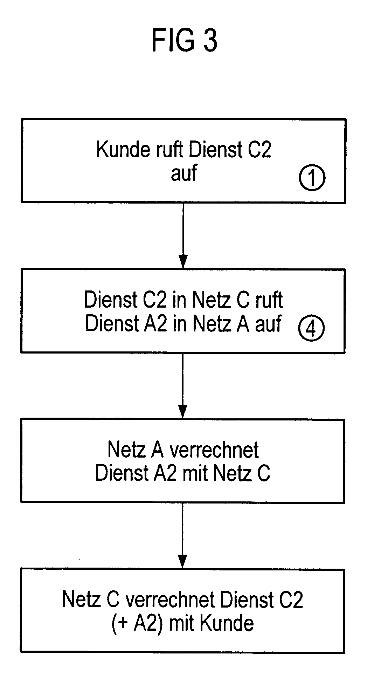

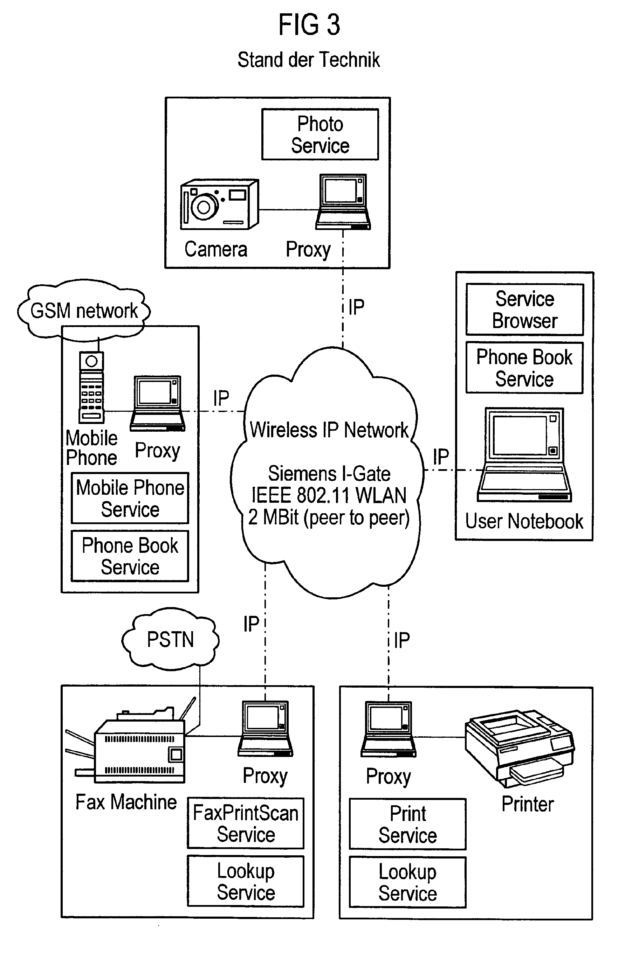

Figur 2 ist ein Ablaufdiagramm des erfindungsgemäßen Verfahrens. Ein Kunde (entsprechend zu Figur 1) will einen Dienst nutzen, also beispielsweise die Aufnahme und den Ausdruck eines Fotos. Hierzu wird der Dienst C2 in dem Netz C aufgerufen α. C2 benötigt zur kompletten Ausführung den (Druck-)Dienst A2 in dem Netz A und ruft diesen auf, φ. A2 verrechnet seinen Gebührenanteil mit dem Netz C, beispielsweise nachdem der Druckauftrag ausgeführt wurde.
Die Gebührenverrechnung mit dem Kunden geschieht dann durch Netz C, welches dabei die zuvor an Netz A entrichteten Gebühren mit berücksichtigt.
(Die Benutzung eines Dienstes durch einen Dienstnehmer bedeutet in den beschriebenen Fällen jedoch nie die ausschließliche Benutzung).

### Literaturverzeichnis

Information Charging, Centralized Tariffing, Siemens AG 1998 A30808-X2731-G308-1-7629
"Billing-Konzepte für neue Dienste", Anil Uberoi, Funkschau 19/99, Seite 24-26, 03.09.1999
"Geistreiche Verbindungen, Intelligente Geräte in dezentralen Netzen", Claudia Piemont, c't 20/1998, Seite 198 - 202.
"JINI™ Architectural Overview", Technical White Paper, SUN Microsystems, 1999
   (beispielsweise zu finden unter http://www.sun.com/jini/)

## Patentansprüche

1. Verfahren zur Vergebührung von Telekommunikations- und Datendiensten in heterogenen Telekommunikations- und Datennetzen (Netz A, Netz B, Netz C), bei dem
- der Dienstnehmer (Kunde) einen Telekommunikationsdienst (C2) in einem ersten Netz (Netz A) aufruft, und
- dieser Dienst zur Ausführung wiederum mindestens einen zweiten Dienst (A2) verwendet, der in einem zweiten Netz (Netz B) ausgeführt wird, und
- die Gebührenberechnung kaskadiert erfolgt.

2. Verfahren nach Patentanspruch 1,
dadurch gekennzeichnet, dass
die kaskadierte Gebührenberechnung durchgeführt wird, indem jeder von einem ersten Dienst (C1) aufgerufene α, σ, δ, φ zweite Dienst (B3) genau eine Gebührenverrechnung durchführt mit dem ihn direkt aufrufenden ersten Dienst (C1).

3. Verfahren nach Patentanspruch 1 oder 2,
dadurch gekennzeichnet, dass
es sich bei mindestens einem der heterogenen Telekommunikationsnetzen um ein sogenanntes Ad-Hoc-Netz handelt.
